# EUROPEAN PATENT SPECIFICATION

(11) **EP 0 393 623 B1**
(45) Date of publication and mention of the grant of the patent: **11.10.1995**
(21) Application number: 90107344.5
(22) Date of filing: 18.04.1990
(51) Int. Cl.: G02B 7/09, G03B 13/18

(54) **Zooming control device for a camera**
Zoomsteuervorrichtung für eine Kamera
Dispositif de commande de réglage de la distance focale pour une caméra

(30) Priority: 19.04.1989 JP 99739/89
(43) Date of publication of application: 24.10.1990
(73) Proprietor: NIKON CORPORATION, Tokyo (JP)
(72) Inventor: Kazami, Kazuyuki, Itabashi-ku, Tokyo (JP); Goto, Tetsuro, Chiba-ken (JP); Sakamoto, Hiroshi, Kawasaki-shi, Kanagawa-ken (JP)
(74) Representative: Weser, Wolfgang

(56) References cited:
- EP-A- 0 206 256
- EP-A- 0 224 921
- US-A- 4 791 308
- US-A- 4 843 475

## Description

### BACKGROUND OF THE INVENTION

### Field of the Invention

The present invention relates to an automatic exposure controlled camera capable of trimming photographing.

### Related Background Art

A bi-focal camera or a camera having a zoom lens, which can vary a focal distance of a photographing lens has been known.

A camera which automatically sets an electronic flash mode when an object field is dark and permits setting of electronic flash inhibit mode in case where the photographing with the electronic flash is prohibited such as in an art galary, has also been known.

In the prior art, when the electronic flashing is forcibly inhibited in a place where the photographing with the electronic flash is prohibited and a size of an object on a screen is changed by zooming, for example, by zooming-up for telescopic photographing, an F-number of a photographing optical system increases (lense becomes dark). As a result, a shutter time which is automatically controlled becomes long and there is a risk of vibration of the camera during the photographing.

The EP-A-0 224 921 discloses a camera provided with an objective lens having a fixed focal length. By providing a first and a second trimming mode, the camera offers three seemingly different focal lengths, namely one real and two pseudo focal lengths.

A camera of the kind defined by the precharacterizing portion of claim 1 is known from the EP-A-0 206 256. This document applies the above trimming mechanism to a zoom lens. The actual zoom lens has a focal length range from 35 mm to 80 mm. In the pseudo tele mode, this range is extended from 80 mm to 200 mm. Since said trimming mode is always applied there only for one and the same focal length value, namely for the maximum value, this known zoom lens, when operated in the trimming mode is merely used like a fixed focus lens.

### SUMMARY OF THE INVENTION

It is the object of the present invention to provide a camera of the kind defined by the precharacterizing portion of claim 1 which minimizes a risk of hand-vibrated photograph when the object field is dark but the eletronic flash is not used and the zoom-up photographing is made.

This object is attained by the characterizing portion of claim 1. Advantageous developments of the invention are given in the subclaim.

In the present invention, for the photographing of the dark object field, the trimming photographing in which the F-number does not change is preferentially selected in response to the zooming operation. Accordingly, the shutter time does not extend unnecessarily and the risk of hand-vibrated photographing is reduced.

### BRIEF DESCRIPTION OF THE DRAWINGS

Fig. 1 shows a block diagram of the present invention,
Fig. 2 shows a block diagram of a first embodiment of the present invention,
Fig. 3 shows a flow chart for illustrating the operation of the first embodiment,
Fig. 4 illustrates a display status of a view field frame viewable in a finder,
Fig. 5 shows a flow chart for illustrating an operation of a modification of the first embodiment,
Fig. 6 shows a flow chart for illustrating the operation due to a release switch SW3,
Fig. 7 shows a block diagram of a second embodiment of the present invention, and
Fig. 8 shows a flow chart for illustrating an operation of the second embodiment.

### DESCRIPTION OF THE PREFERRED EMBODIMENTS

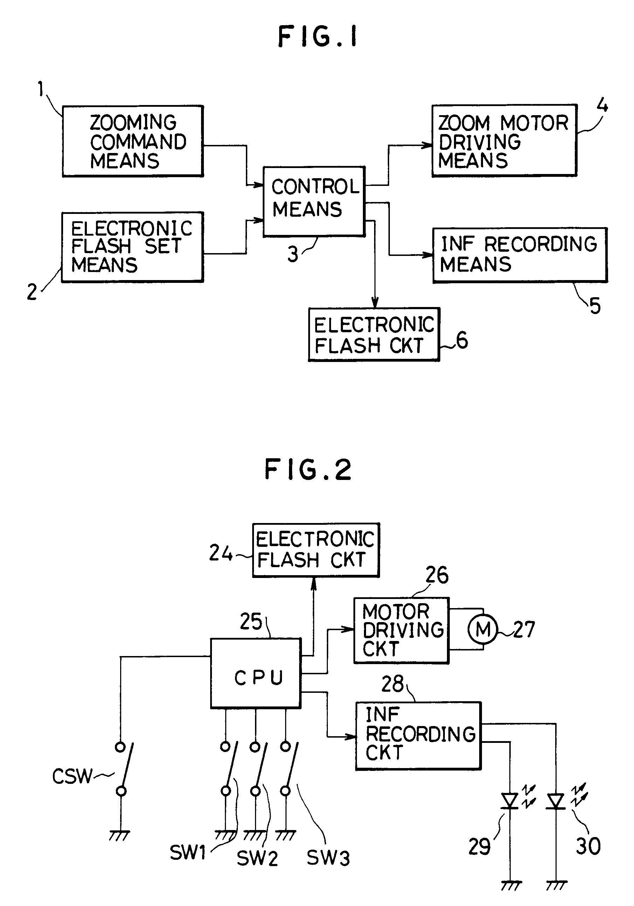

Fig. 1 shows a block diagram which illustrates a concept of the embodiment to be described below.

Signals from zooming command means 1 which responds to an external operation and electronic flash mode set means 2 for switching an electronic flash mode are applied to control means 3. The control means 3 supplies control signals to zoom motor drive means 4 which changes a focal distance of the photographing lens by motor control, record means 5 for recording selected trimming information on a film or a film container, and an electronic flash circuit 6.

In response to inputs from the zooming command means 1 and the electronic flash setting means 2, the control means 3 controls the zoom motor drive means 4, the information record means 5 and the electronic flash circuit 6.

Fig. 2 shows an embodiment of the present invention applied to an automatic exposure controlled camera which is programmed to change a shutter speed in accordance with the brightness of the object field or of an iris preference type and which automatically sets the electronic flash mode when the object field is dark.

Four switches are connected to a central processing unit (CPU). CSW denotes a switch which selects the electronic flash mode, more particularly, inhibits the electronic flash. In the present embodiment, the electronic flash is inhibited when the switch is ON.

Switches SW1 and SW2 are linked to the zooming operation. When the switch SW1 is ON, the zoom-up operation is performed, and when the switch SW2 is ON, the zoom-down operation is performed. A switch SW3 is a release switch which is responsive to the release of a shutter.

A signal is supplied from the CPU 25 to the electronic flash circuit 24 to supply information as to whether the electronic flash is fired or not depending on the status of CSW.

The CPU 25 also controls a motor drive circuit 26 which drives the zoom motor 27 in accordance with the switches SW1 and SW2. The motor 27 drives the zoom lens which function as a photographing optical system (photographing lens) to change a focal length.

The CPU 25 further supplies a signal to an information record circuit 28. When the CPU 25 selects the trimming photographing in response to the actuation of CSW and the switches SW1 and SW2, the information record circuit 28 records the trimming information on a film by LED's 29 and 30.

The trimming infromation designates an area in a photographing image which is to be enlarge-printed. The trimming information recorded on the film is read out in a print stage in a laboratory, and the area designated by the trimming information is enlarge-printed to a normal one-frame print size. Accordingly, the photograph print printed in accordance with the trimming information appears as if it were photographed by the zoom-up photographing optical system.

The recording of the information on the film is not limited to optical recording on the film by the LED. For example, it may be magnetically recorded on a film container (film potorone)

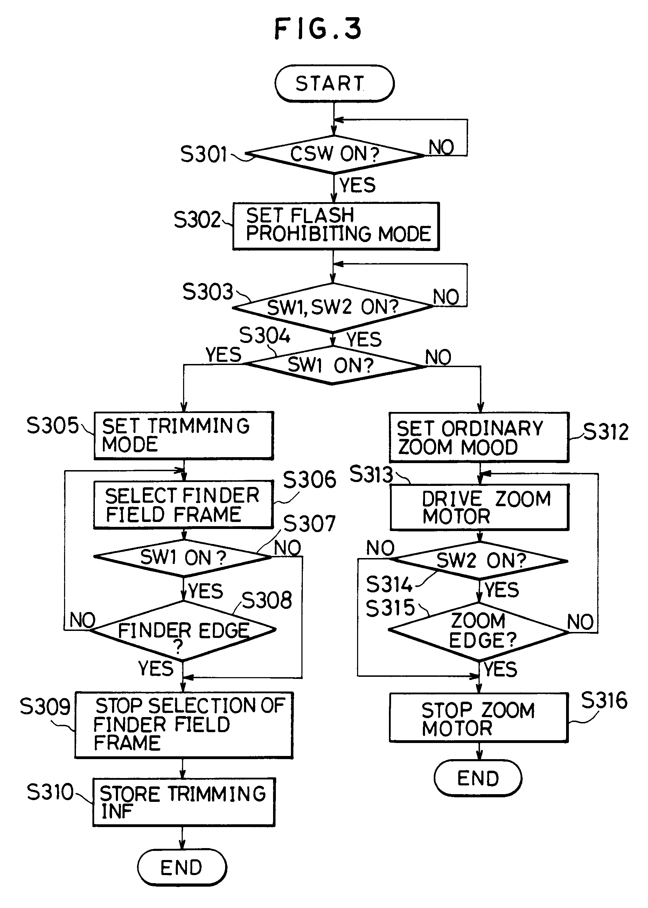

Fig. 3 shows a flow chart of the CPU 25 which illustrates the operation of the embodiment of Fig. 2.

When the switch CSW is not ON, the CPU 25 sends a signal to the motor drive circuit 26 in response to the actuation of the switches SW1 and SW2 to drive the zoom motor 27. Thus, the photographing optical system is driven and desired zooming is carried out.

When the object field is dark, the CPU 25 automatically activates the electronic flash circuit 24 to effect the electronic flashing.

In a step S301, the ON status of CSW is monitored. When the electronic flash inhibit mode is selected, the flow starts the operation. In the present embodiment, when the object field is dark, the electronic flash is automatically fired. Accordingly, when the electronic flash inhibit mode is selected, it is determined that the electronic flash photographing is not performed in spite of dark object field.

If the decision in the step S301 is affirmative, that is, if CSW is ON, the process proceeds to a step S302 where the electronic flash inhibit mode in which the automatic electronic flash is inhibited is set. In a step S303, the actuation of the zoom switches SW1 and SW2 is monitored. If one of the switches SW1 and SW2 is ON in the step S303, which one of the switches SW1 and SW2 is ON is determined in the step S304. If the switch SW1 is ON, the process proceeds to a step S305, and if the switch SW1 is OFF, that is, if the switch SW2 is ON, the process proceeds to a step S312.

When the switch SW1 is ON, the zoom-up is designated. In this case, since the electronic flash inhibit mode has been set, the electronic flash is not fired in spite of the dark object field. Accordingly, in the auto-exposure camera of the present embodiment, a shutter time becomes long. As a result, the hand-vibration likely occurs. In the present embodiment, therefore, the trimming mode which does not cause the change of F-number, that is, a mode in which the trimming information is recorded on the film without driving the photographing optical system is selected. In a step S305, this trimming mode is set.

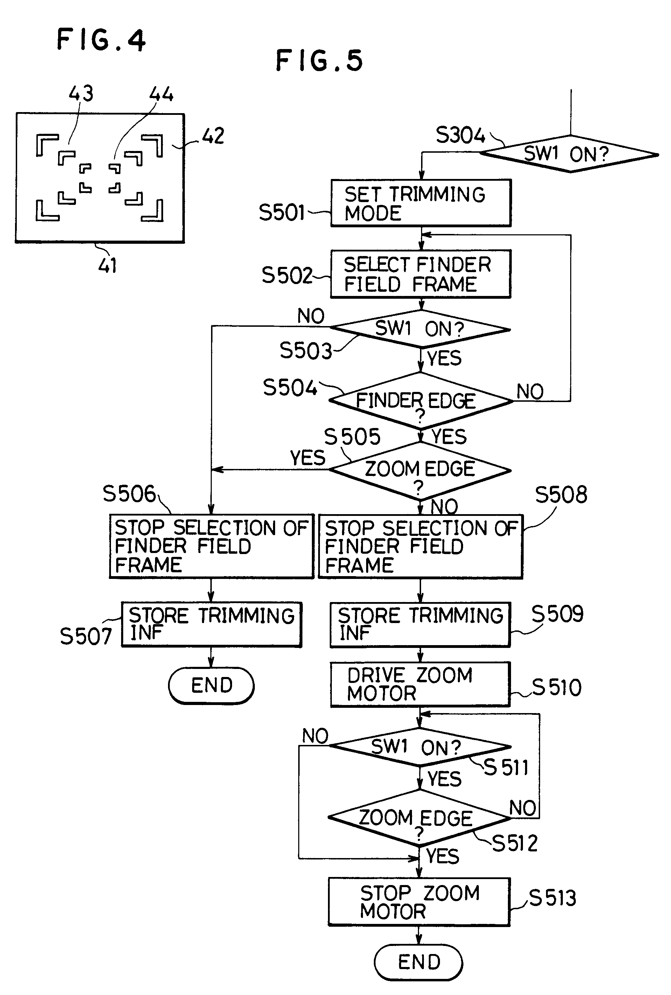

Steps S306 - S308 relate to the zoom-up operation in the trimming mode. The operation is continued from the turn-on of the switch SW1 until the zoom-up reaches the finder end. The finder process is shown in Fig. 4. A view frame is changed in response to the zooming operation of the trimming mode. It changes from 42 to 43 and 44 in sequence as the zoom-up operation is performed.

When the switch SW1 is turned off or when the selected view frame is the minimum frame 44, the process proceeds to a step S309 where the finder processing is stopped.

In a step S310, the CPU 25 stores the trimming value corresponding to the current view frame as the information.

In a step S312, the normal zoom mode in which the photographing optical system is driven is set since the zoom-down is required in the electronic flash inhibit mode, the optical system is driven to reduce the F-number, that is, make the lens brighter.

Steps S313 - S315 relate to the zoom-down operation. When the zoom-down switch SW2 is turned off or when the zoom end (wide end in this case) is reached, a signal is sent to the motor drive circuit 26. In a step S316, the zoom motor 27 is stopped and the zooming operation of the photographing optical system is terminated.

Fig. 5 shows a modification of the above embodiment. When the zoom-up operation is performed in the electronic flash inhibit mode, the trimming mode is preferentially selected. If further zoom-up is required at the limit of trimming, the normal zoom-up by the zooming operation of the photographing optical system is carried out.

In the modification, the operation up to the step S304 is similar to that of the above embodiment. Then, the steps S501 et seq are carried out. The steps S501 - S504 are same as the step S305 - S308 of the embodiment of Fig. 3, the steps S506 and S507 are same as the steps S309 and S310 of the embodiment of Fig. 3, and the steps S508 and S509 are same as the step S309 and S310 of the embodiment of Fig. 3.

In the present embodiment, however, when the finder and is reached in the trimming mode, whether the photographing optical system is at the zoom end, that is, the limit position at the telescopic end is determined in a step S505.

If the photographing optical system is not at the zoom end, the finder processing is stopped in a step S508 and the trimming information is stored in a step S509.

In a step S510, a signal is sent to the motor drive circuit 26 to drive the motor 27. Thus, the photographing optical system is driven for zooming up.

In a step S511, whether the switch SW1 is ON or not is determined. In a step S512, whether the photographing optical system has reached the zoom end or not is determined. The steps S511 and S512 are repeated until it reaches the zoom end.

When the photographing optical system reaches the zoom end or if the switch SW1 is turned off in the course of reaching the zoom end, a signal is sent to the motor drive circuit 2 in a step S513 to stop the motor 27.

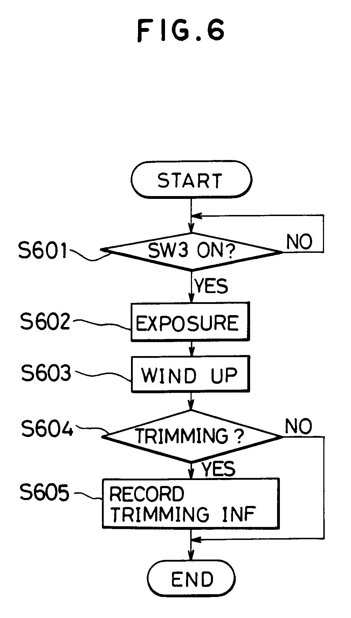

Fig. 6 shows a process flow of the operation of the switch SW3 or the release switch. In a step S601, the input of the switch SW3 is monitored. When the switch SW3 is turned on, it is determined that the shutter has been released and an exposure process is executed in a step S602, and the film is wound up in a step S603.

In a step S604, whether the photographing is in the trimming mode or not is determined. If it is the trimming mode, the trimming information is recorded on the film or film container in a step S605. This information is utilized when the printing is done in the laboratory.

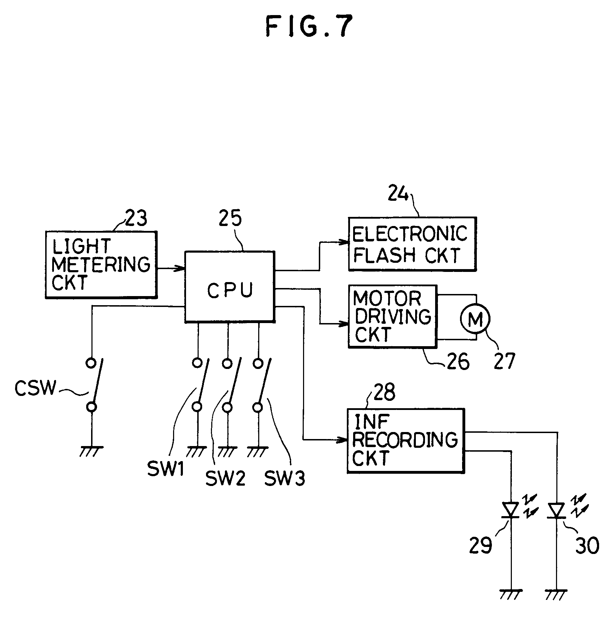

Fig. 7 shows a second embodiment of the present invention.

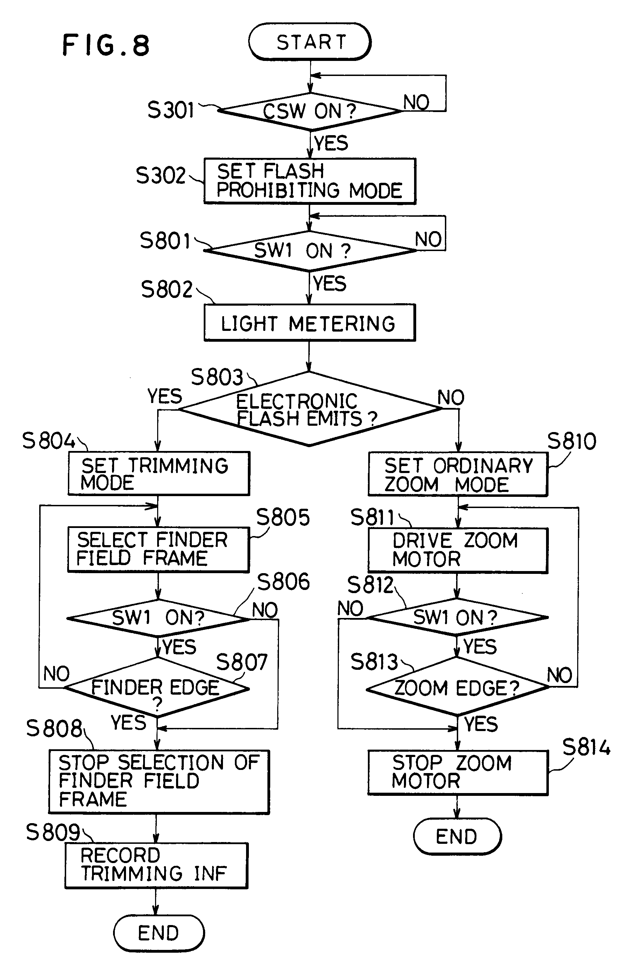

A difference from the embodiment of Fig. 2 resides in that a signal from a light metering circuit is supplied to the CPU 25. The operation is explained with reference to a flow chart of Fig. 8. Basically, it is same as that of Fig. 3 but modified portions are designated by new numerals.

The step S301 and S302 are same as those of the embodiment of Fig. 3.

In a step S801, the zoom-up entry by the switch SW1 after the electronic flash inhibit mode has been set is monitored. When the zoom-up input, that is, the ON status of the switch SW1 is detected, the process proceeds to a step S802. When the switch SW1 is off, the operation is repeated until the switch SW1 is turned on.

In the step S802, the light metering is performed. The light metering operation is carried out based on exposure factors such as object field brightness and film sensitivity.

In a step S803, whether the object field brightness requires the firing of the electronic flash or not is determined.

If it is determined in the step S803 that the firing of the electronic flash is required, the process proceeds to a step S804 to select the trimming mode. If it is determined in the step S803 that the firing of the electronic flash is not required, the process proceeds to a step S810 to select a normal zoom mode.

If it is determined in the step S803 that the firing of the electronic flash is required, it means that the object field is so dark. Thus, the shutter time is long. If the photographing optical system is driven in the zoom-up direction, the F-number increases and the lens becomes darker. As a result, the shutter time becomes longer. As a result, the hand-vibration is very likely to occur. In view of the above, in the present embodiment, the trimming mode is selected in order to avoid to increase the F-number.

On the other hand, when it is determined in the step S803 that the firing of the electronic flash is not required, it means that the object field is bright, and the shutter time is short. Accordingly, even if the photographing optical system is driven in the zoom-up direction to increase the F-number, the shutter time will not be long to cause the hand vibration. Accordingly, in the present embodiment, the normal zoom mode is selected.

The steps S804 - S809 when the trimming mode is selected are same as the steps S305 - S310 of the embodiment of Fig. 3.

When the normal zoom mode is selected, the CPU drives the photographing optical system by the motor 27 in a step S810.

In a step S811, the zoom motor 27 is driven for zooming up.

In a step S812, whether the switch SW1 is ON or not is determined.

If the switch SW1 is ON, the process proceeds to a step S813 where whether the photographing optical system has reached the zoom end or not is determined.

If it is determined that it has reached the zoom end, the zoom motor 27 is stopped through the motor drive circuit 26.

If the switch SW1 is not ON in the step S812, in other words, if it is OFF, the process proceeds to a step S814 to stop the motor 27.

If it is determined in the step S813 that the photographing optical system has not reached the zoom end, the process returns to the step S811.

The zoom motor 27 is driven until the switch SW1 is turned off or the photographing optical system reaches the zoom end.

In the present embodiment, when the electronic flash inhibit mode is not selected, the CPU 25 sends a signal to the motor drive circuit 26 in accordance with the actuation of the switches SW1 and SW2 to drive the motor 27 in order to drive the photographing optical system. Thus, the zooming operation is performed in accordance with the switches SW1 and SW2. So long as the electronic flash inhibit mode is not selected, the CPU 25 automatically activates the electronic flash circuit 24 when the object field is dark to fire the electronic flash.

In the present embodiment, again, the trimming information stored in the CPU 25 is recorded on the film or film container in the same manner as that shown in Fig. 6.

The camera of the type in which the electronic flash is automatically fired has been described so far. The present invention is also applicable to an auto-exposure controlled camera in which the electronic flash is not automatically fired.

For example, in the embodiment of Fig. 8, the steps S301 and S302 may be omitted, and when the object field is dark, the step S803 to S809 may be executed, and when the object field is bright, the steps S810 to S814 may be executed.

In accordance with the present invention, either one of the trimming mode and the normal zoom mode may be automatically selected depending on the status of the object field so that the hand-vibrated photographing is prevented.

## Claims

1. A camera comprising:
- a photographing optical lens system having a shorter and a longer focal length;
- focal length setting means (SW1, SW2) operable to change the focal length of the lens system;
- drive means (4) for driving the lens system to change the focal length thereof, and
- trimming area setting means for setting an area in a photographing image which is to be enlarge-printed, said area is less than that which is actually exposed, and
- light metering means (23) for detecting a brightness of an object field,
characterized by
- control means (25) responsive to an output of the light metering means (23) and to the operation of the focal length setting means (SW1, SW2), for activating the drive means (4) to set the longer focal length when the object field is brighter than a predetermined level, and for activating the trimming area setting means with the lens system having said shorter focal length, when the object field is darker than the predetermined level.

2. A camera according to claim 1,
being adapted to be operated in a mode of automatically firing an electronic flash in accordance with a brightness of an object field, and having a mode setting means (CWS) for forcibly disabling an automatic flash firing, with the control means being further adapted for activating the trimming area setting means instead of the photographing optical system drive means (4) in response to the operation of the focal length setting means (SW1, SW2), when the mode setting means (CWS) is activated.

## Patentansprüche

1. Kamera mit:
- einem Aufnahmeobjektivsystem mit einer kürzeren und einer längeren Brennweite,
- einer Brennweiten-Einstelleinrichtung (SW1, SW2), die zu einer Änderung der Brennweite des Objektivsystems fähig ist,
- einer Antriebseinrichtung (4) zum Antrieb des Objektivsystems zur Änderung von dessen Brennweite und
- einer Trimmgebiet-Einstelleinrichtung zum Einstellen eines Gebietes in einem photographischen Bild, welches zu vergrößern ist, wobei das Gebiet kleiner als dasjenige ist, das tatsächlich belichtet wird, und
- einer Lichtmeßeinrichtung (23) zum Nachweis der Helligkeit des Objektfeldes,
gekennzeichnet durch
- eine Steuereinrichtung (25), die auf den Ausgang der Lichtmeßeinrichtung (23) und auf die Betätigung der Brennweiten-Einstelleinrichtung (SW1, SW2) anspricht, zur Aktivierung der Antriebseinrichtung (4), um die längere Brennweite einzustellen, wenn das Objektfeld heller als ein vorbestimmtes Niveau ist, und zum Aktivieren der Trimmgebiet-Einstelleinrichtung, wobei das Objektivsystem die kürzere Brennweite hat, wenn das Objektfeld dunkler als das vorbestimmte Niveau ist.

2. Kamera nach Anspruch 1, die so ausgebildet ist, daß sie in einer Betriebsart des automatischen Zündens eines elektronischen Blitzes entsprechend der Helligkeit des Objektfeldes arbeiten kann, und die eine Betriebsarteinstelleinrichtung (CWS) zum erzwungenen Unterdrücken des automatischen Zündens des Blitzes hat, wobei die Steuereinrichtung weiter so ausgebildet ist, daß sie die Trimmgebiet-Einstelleinrichtung anstelle der Aufnahmeobjektivsystem-Antriebseinrichtung (4) in Reaktion auf die Betätigung der Brennweiten-Einstelleinrichtung (SW1, SW2) aktiviert, wenn die Betriebsarteinstelleinrichtung (CWS) aktiviert ist.

## Revendications

1. Appareil de prise de vues, comprenant :
- un système de lentilles optiques photographiques possédant une distance focale courte et une distance focale longue;
- des moyens (SW1,SW2) de réglage de la distance focale, aptes à modifier la distance focale du système de lentilles;
- des moyens d'entraînement (4) pour entraîner le système de lentilles pour modifier sa distance focale, et
- des moyens de réglage d'une zone de calibrage servant à régler, dans une image photographique, une zone qui doit être imprimée à l'état agrandi, ladite zone étant inférieure à celle qui est actuellement exposée, et
- des moyens photométriques (23) pour détecter une luminosité d'un champ objet,
caractérisé par
- des moyens de commande (25) sensibles à un signal de sortie des moyens photométriques (23) et au fonctionnement des moyens (SW1,SW2) de réglage de la distance focale, pour activer les moyens d'entraînement (4) de manière à régler la distance focale longue lorsque le champ objet est d'une luminosité supérieure à un niveau prédéterminé, et pour activer les moyens de réglage de la zone de calibrage avec le système de lentilles possédant ladite courte distance focale, lorsque le champ objet est plus sombre que le niveau prédéterminé.

2. Appareil de prise de vues selon la revendication 1,
apte à fonctionner dans un mode de déclenchement automatique d'un flash électronique en fonction d'une luminosité d'un champ objet, et possédant des moyens (CWS) de réglage de mode servant à bloquer à force un déclenchement automatique de flash, les moyens de commande étant en outre adaptés pour activer les moyens de réglage de la zone de calibrage à la place des moyens (4) d'entraînement du sytème optique photographique, en réponse à l'opération des moyens (SW1,SW2) de réglage de la distance focale, lorsque les moyens (CWS) de réglage de mode sont activés.
